(19) Europäisches Patentamt
European Patent Office
Office européen des brevets

(11) Publication number: **0 506 087 A2**

# (12) EUROPEAN PATENT APPLICATION

(21) Application number: **92105311.2**

(51) Int. Cl.[5]: **C11D 1/722**

(22) Date of filing: **27.03.92**

(30) Priority: **28.03.91 US 676550**

(43) Date of publication of application:
**30.09.92 Bulletin 92/40**

(84) Designated Contracting States:
**AT BE CH DE DK ES FR GB GR IT LI LU MC NL PT SE**

(71) Applicant: **UNION CARBIDE CHEMICALS AND PLASTICS COMPANY INC. (a New York corporation)**
**39 Old Ridgebury Road**
**Danbury Connecticut 06817-0001(US)**

(72) Inventor: **Meschke, Debra Joann**
**2022 Parkwood Road**
**Charleston (25314) West Virginia(US)**
Inventor: **Readshaw, Ronald Louis**
**1859 Rolling Hills Road**
**Charleston (25314) West Virginia(US)**
Inventor: **Joseph, Albert Ferris**
**109 Ellison Road**
**Charleston (25314) West Virginia(US)**

(74) Representative: **von Hellfeld, Axel, Dr. Dipl.-Phys.**
**Wuesthoff & Wuesthoff Patent- und Rechtsanwälte Schweigerstrasse 2**
**W-8000 München 90(DE)**

## (54) Cleaning compositions and methods for using same.

(57) Cleaning compositions and methods for cleaning using such compositions are disclosed. In one embodiment the composition comprises a debris solubilizing amount of at least one alkoxylate selected from compounds having the formula

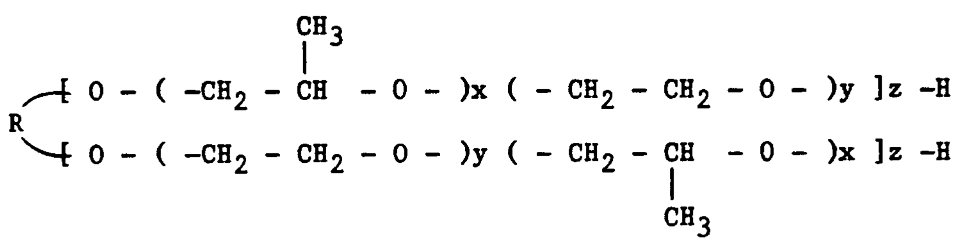

and mixtures thereof, wherein R contains about 5 to about 11 carbon atoms and is preferably selected from alkylene radicals, substituted alkylene radicals, alkenylene radicals and substituted alkenylene radicals, each x and y is independently selected from integers in the range of 0 to about 20, provided that the sum of all the x's and y's is at least 1, and each z is independently selected from the integers 0 and 1, provided that at least one of the z's is 1.

EP 0 506 087 A2

## Background of the Invention

This invention relates to cleaning compositions and methods of cleaning surfaces. More particularly, the invention relates to such compositions which include certain defined solvents which also are effective surfactants or surface active agents, and to methods using such compositions to clean debris or soil from surfaces, such as hard surfaces.

Cleaning compositions, particularly those used to treat hard surfaces, often contain both a relatively large concentration of one or more conventional solvents, such as ethylene glycol butyl ether, diethylene glycol butyl ether and the like, and a relatively small concentration of one or more conventional surface active agents such as alkylphenol alkoxylates, primary and secondary alcohol alkoxylates and the like, in order to obtain good cleaning performance. It would be advantageous, for example, in terms of cost and ease of manufacturing, to provide compositions which do not require both a solvent and a separate surface active agent.

European Patent Publication No. 0336673 discloses a dampening water composition, for lithographic printing, which comprises 0.1 to 5% by weight of one or more monoalcohols or diols of alkanes or alkenes having 5 to 11 carbon atoms, to which 1 to 10 moles of ethylene oxide and/or propylene oxide are added. These dampening water compositions are disclosed as containing alkaline substances, wetting agents, chelating agents, preservatives, coloring agents, corrosion inhibiting agents, film hardening agents, organic solvents, surface active agents and anti-foam agents. This publication does not disclose or suggest these dampening water compositions in any cleaning applications.

## Summary of the Invention

New cleaning compositions and methods for cleaning debris from surfaces have been discovered. The present compositions utilize one or more defined alkoxylates as solvents. The use of relatively high concentrations of such alkoxylates has been found to provide benefits in addition to effective solvent characteristics. For example, such alkoxylates in effective solvent concentrations have been found to substantially reduce, or even eliminate, the need for a separate surface acting agent in the present cleaning compositions. Thus, the present compositions often have fewer ingredients and are easier and less costly to process into final products as compared to conventional cleaning compositions. Importantly, the cleaning performance of the present compositions is as good as or better than comparable cleaning compositions which include both conventional solvents and conventional surface active agents.

In one broad aspect, the present invention is directed to a method for cleaning debris or soil from a surface which comprises contacting the surface with a composition comprising at least one alkoxylate, as defined herein, at conditions effective to remove debris from the surface. As a result of this contacting, debris is removed from the surface. The alkoxylate is present in an amount effective to solubilize at least a portion of the removed debris and is selected from compounds having the formula

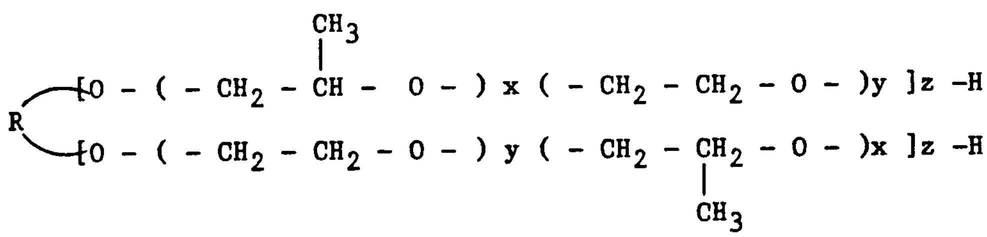

and mixtures thereof, wherein R is a divalent organic radical which contains about 5 to about 11 carbon atoms, preferably selected from the group consisting of alkylene radicals, substituted alkylene radicals, alkenylene radicals and substituted alkenylene radicals; each x and y is independently selected from integers in the range of 0 to about 20, provided that the sum of all the x's and y's is at least 1, and preferably does not exceed about 20; and each z is independently selected from the integers 0 and 1, provided that at least one of the z's is 1.

Useful cleaning compositions (1) comprise water and an effective solvent amount, preferably at least about 2% by weight, of at least one of certain alkoxylates, as described herein; and/or (2) comprise at least one of certain alkoxylates, as described herein, which the sum of all the x's and y's is greater than 10, and preferably does not exceed about 20.

Detailed Description of the Invention

The present cleaning methods and compositions involve at 20 least one alkoxylate selected from compounds having the formula

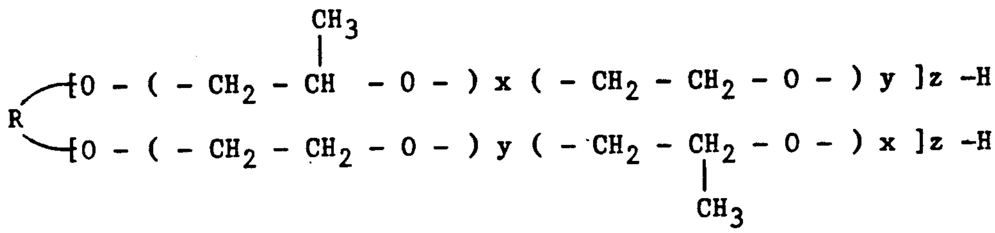

and mixtures thereof, wherein R is a divalent organic radical which contains about 5 to about 11 carbon atoms, preferably selected from the group consisting of alkylene radicals, substituted alkylene radicals, alkenylene radicals and substituted alkenylene radicals; each x and y is independently selected from integers in the range of 0 to about 20, provided that the sum of all the x's and y's is at least 1, and preferably does not exceed about 20; and each z is independently selected from the integers 0 and 1, provided that at least one of the z's is 1.

In the event the compositions include water, for example, a major amount, i.e., at least about 50% by weight, of water, the alkoxylate or alkoxylates are preferably soluble, or at least dispersible, in such water at 22 ° C (room or ambient temperature). To facilitate such water solubility, it is preferred that the alkoxylate or alkoxylates include at least one ethoxy group. Thus, in one embodiment, at least one of the y's is other than 0, more preferably in the range of 1 to about 20. Any or all of the x's can be 0.

Although R can be any suitable divalent organic radical, such as a divalent hydrocarbyl radical or a divalent substituted hydrocarbyl radical, it is preferred that R be a alkylene-radical or alkenylene radical or a substituted counterpart thereof, that is a divalent aliphatic or cycloaliphatic radical (or a substituted counterpart thereof) which is saturated or contains a single carbon-carbon double bond. In a particularly useful embodiment, R is a secondary radical, that is a radical in which at least one of the carbon atoms having an available bonding site is bonded directly to two different carbon atoms. Examples of suitable alkylene radicals include pentylenes, hexylenes, cyclohexylenes, heptylenes, octylenes, nonylenes, decylenes and undecylenes. Examples of suitable alkenylene radicals include pentenylenes, cyclopentenylenes, hexenylenes, cyclohexenylenes, heptenylenes, cycloheptenylenes, octenylenes, nonenylenes, decenylenes, and undecenylenes. Examples of substituted alkylene and alkenylene radicals include the above-noted alkylene and alkenylene radicals substituted with one or more substituent groups including elements such as oxygen, nitrogen, carbon, hydrogen, halogen, sulfur, phosphorus and the like and mixtures or combinations thereof. Specific radicals from which R may be selected include n-pentylene, iso-pentylene, sec-pentylene, t-pentylene, 3-methoxybutylene, n-hexylene, 2-methyl-1-pentylene, sec-hexylene, 2-ethylbutylene, hexenylene, 3-heptylene, heptenylene, n-octylene, octenylene, 2-ethylhexylene, sec-octylene, nonylene, 2,6-dimethyl-4-heptylene, n-decylene, decenylene, secundecylene, cyclohexylene, methyl cyclohexylene, 3,3,5-trimethyl cyclohexylene, 1,5-pentylene, 2,4-pentylene, 2,5-hexylene, 1,6-hexylene, 1,7-heptylene, 2,4-heptylene, 2-methyl-2,4-pentylene, 2-ethyl-1,3-hexylene, 1,8-octylene, 1,9-nonyene, 1,10-decylene, cyclopent-1,2-ylene, cyclohex-1,2-ylene, cyclohex-1,4-ylene, 2,2-diethyl-1,3-propylene, 2-butyl-2-ethyl-1,3-propylene and the like.

More preferably, R is selected from alkylene radicals. In one embodiment, R contains about 5 to about 10, and more particularly about 7 to about 10, carbon atoms. A particularly useful example is R is 2,6-dimethyl heptylene.

Although both z's can be 1, it is preferred that only one z is equal to 1 and the other z is equal to O.

In one embodiment, the sum of the x's and y's (or the sum of x and y if only one z is equal to 1) is greater than 10, and preferably does not exceed about 20. In another embodiment, the sum of the x's end y's (or the sum of x end y if only one z is equal to 1) is in the range of about 3 to about 12. In the above-noted formula, the ethoxy groups and propoxy groups are shown as occurring in blocks of ethoxy groups followed by blocks of propoxy groups or vice versa. However, it should be understood that the individual ethoxy groups and propoxy groups can occur at random locations along the alkoxylate chain.

A particularly useful alkoxylate has the following formula

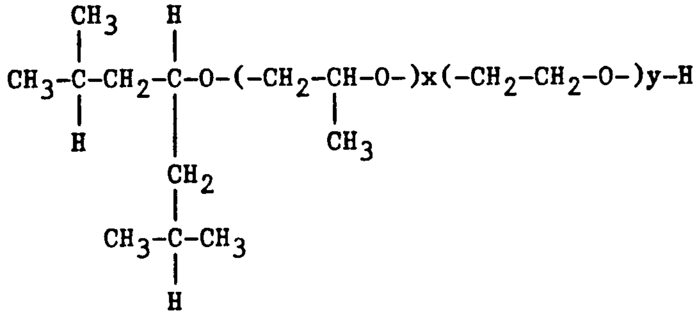

The present alkoxylates can be prepared using conventional and well known techniques. For example, ethylene oxide and/or propylene oxide can be reacted with a monohydroxy alcohol or a di-hydroxy alcohol (from which the desired R group is obtained) in the presence of a catalytic material, such as $BF_3$ and/or potassium hydroxide and the like, to produce the desired alkoxylate. This reaction may occur in the presence of a solvent, such as toluene, xylenes, chlorobenzene, glyme and the like. Reaction temperatures in the range of about 20° C to about 210° C, preferably about 80° C to about 140° C, and reaction times in the range of about 0.5 hours or less to about 20 hours, preferably about 1 hour to about 6 hours, are often appropriate. Among the catalytic materials which may be used to catalyze or promote this "addition" reaction include, for example, alkali metal hydroxides, alkali metal hydrides, alkaline earth metal hydroxides, metal halides and the like and mixtures thereof. specific examples of useful catalytic materials include sodium hydroxide, potassium hydroxide, sodium hydride, magnesium hydroxide, calcium hydroxide, $BF_3$ and the like and mixtures thereof.

After the reaction, the alkoxylate or alkoxylates can be recovered from the solvent and/or unreacted reactants and/or catalyst. For example, the solvent and other materials, if any, can be stripped from the alkoxylate product. Also, the catalyst can be deactivated or neutralized, e.g. by the addition of an acidic component, such as acetic acid, phosphoric acid and the like. One or more other conventional techniques, e.g., extraction, distillation, filtration, centrifugation and the like, can be employed to recover or purify the alkoxylate product.

The alkoxylate or alkoxylates, as described herein, have been found to be useful in cleaning compositions and methods for cleaning debris or soil from surfaces, such as hard surfaces, e.g., glass, organic polymeric material, metal, ceramic, other inorganic surfaces, such as wallboard, and the like surfaces. The presently useful alkoxylates have been found to be effective as both a debris solvent and as a surfactant in such cleaning compositions. Thus, when at least one of the presently useful alkoxylates is used in a cleaning composition in an amount effective to solubilize at least a portion of the removed debris, such amount of the alkoxylate is preferably also effective to act as a surfactant in the cleaning composition. Put another way, the use of solvent effective amounts of one or more of the herein described alkoxylates results in effective cleaning compositions which may not be substantially improved, for example, in terms of cleaning effectiveness, by the addition of one or more other, e.g., conventional, surfactants. Thus, in one embodiment, the present compositions are substantially free of one or more surface active agents, or surfactants, other than the alkoxylate or alkoxylates, described herein.

The present cleaning compositions preferably include at 30 least about 2% by weight of such alkoxylate or alkoxylates.

This amount is substantially in excess of the amount of surfactant conventionally included in hard surface cleaning compositions. In one embodiment, more than 5% by weight of one or more of such alkoxylates is included in the present cleaning compositions.

The cleaning compositions often include a carrier, in particular a liquid carrier, for the active component or components. Any suitable liquid carrier may be employed, provided that it has no significant detrimental effect on the surface being cleaned. Such carrier preferably includes water. More preferably, a major amount by weight of the composition is water. In a particularly useful embodiment, the alkoxylate or alkoxylates in the present compositions are soluble, or at least dispersible, in the water of the composition at 22° C and/or at the conditions at which the composition is used. More preferably, substantially all of the components of the present compositions are soluble, or at least dispersible, in the liquid carrier at 22° C and/or at use conditions. This feature allows the cleaning composition to be a homogenous liquid which is easily and effectively transported, stored and used.

The present cleaning compositions may include one or more additional solvent components. Such components act, for example, to perform at least one of the following functions: to aid in releasing oily or

greasy soils from the soiled surface; to at least assist to solubilize such released oily and greasy soils; and as a rinse aid, that is to assist in obtaining substantially streak free rinsing of the cleaned surface. Examples of useful additional solvent components include glycol ethers such as ethylene glycol butyl ether, diethylene glycol butyl ether, propylene glycol monopropyl ether, and the like and mixtures thereof; and alcohols, in particular isopropanol. If used, such additional solvent components are preferably included in the present compositions in an amount effective to act as a solvent, as described herein, more preferably in an amount of about at least about 2% by weight of the composition and still more preferably at least about 5% by weight of the composition.

In addition, the present cleaning compositions may include one or more builder components. Such builder components, many of which are conventional and well known in the art of hard surface cleaning compositions, act, for example to perform at least one of the following functions: inactivate water hardness metal ions; to assist in soil release; to assist in suspending soil in the cleaning composition; and to provide alkalinity to the cleaning composition, which alkalinity acts to enhance the cleaning ability of the composition. Examples of useful builder components include tetrapotassium pyrophosphate, sodium tripolyphosphate, sodium carbonate, trisodium phosphate, sodium silicate, sodium citrate, and the like and mixtures thereof. Such builder component or components are present in the present compositions in amounts effective to act as a builder component, as described herein. Preferably, the present compositions contain one or more builder components in amounts in the range of about 0.5% or less to about 10% or more, more preferably in the range of about 1% to about 8%, by weight of the total composition.

Even though the presently useful alkoxylates have certain surfactant properties, it may be desirable, in certain embodiments, to include one or more additional surfactants or surface active agents. Surfactants in the present cleaning compositions act, for example, to perform at least one of the following functions: to wet the soiled surface; to provide for soil release into the cleaning composition; to at least assist in keeping the removed soil suspended in the cleaning composition; and to provide for a improved rinse, that is a clean, streak-free rinse. The additional surfactant or surfactants used in the present compositions may be either non-ionic, anionic or cationic. The cationic materials can be used in disinfectant cleaning compositions. Many surfactants are conventionally used in hard surface cleaning compositions.

Any of such surfactants may be employed in the present compositions, provided that such additional surfactant or surfactants do not significantly interfere with the functioning of the other components of the present compositions or with the overall functioning of the present compositions. Specific examples of useful additional surfactants include nonylylphenol ethoxylates, octylphenol ethoxylates, secondary alcohol ethoxylates, primary alcohol ethoxylates, dodecylbenzene sulfonate, alcohol sulfates, alcohol ethoxy sulfates, and the like and mixtures thereof.

Such additional surfactants are present in relatively minor amounts. Such additional surfactant or surfactants should be present in an amount effective to act as a surfactant, as described herein. Of course, such surfactant should be present in an amount effective to perform at least one of the surfactant functions, e.g., as described above. In particular, such surfactants are often present in an amount in the range of less than about 1% by weight of the total composition.

The present cleaning compositions may include additional components, such as those conventionally used in cleaning compositions employed for similar applications. Examples of such additional components include dyes, fragrances, disinfectants, pH adjusters, antifoam (defoamer) agents, bactericides, fungicides, mildewcides, preservatives and the like. Such additional component or components are included in an amount effective to provide the desired property. Such amount may, for example, be substantially similar to the amount of such additional component or components conventionally included in cleaning compositions for similar applications. Of course, such additional component or components should be chosen to be compatible with the other components of the cleaning composition.

The present cleaning compositions can be prepared using conventional techniques for preparing the type of cleaning composition involved. For example, the components can be blended together, with mixing, in the desired proportions to achieve the desired cleaning compositions.

The present cleaning compositions are used in a manner similar to that in which cleaning compositions, e.g., hard surface cleaning compositions, are conventionally used. Thus, the surface to be cleaned is contacted with the cleaning composition at conditions effective to remove debris from the surface. The surface to be cleaned can be immersed or dipped into a quantity of the cleaning composition. Alternately, a quantity of the cleaning composition can be applied to, e.g., sprayed or poured onto, the surface to be cleaned. Rubbing or other mechanical action may be useful to remove the debris from the surface. After this contacting, the surface may be rinsed, for example, with water, to remove any residual debris and cleaning composition from the surface.

The following non-limiting Examples illustrate certain aspects of the present invention.

EXAMPLES 1 TO 8

A series of four (4) ethoxylates or mixed ethoxylatepropoxylate products were prepared by reacting 2,6-dimethyl heptan-4-ol with appropriate amounts of ethylene oxide or mixtures of ethylene oxide and propylene oxide. The ethoxylates were prepared using boron trifluoride as the catalyst to react the first three (3) to five (5) moles of ethylene oxide. The ethoxylations were completed using potassium hydroxide catalyst. The mixed ethoxylate-propoxylate products were prepared using potassium hydroxide catalyst throughout. With $BF_3$ as catalyst, reaction temperature ranged from 60°C to 100°C, while with KOH as catalyst, the reaction temperature was 140°C. The reaction time was controlled to achieve the desired degree of alkoxylation. The mixed ethoxylate-propoxylate products included a "block"' of propoxy groups followed by a "block" of ethoxy groups. In other words, the propoxy groups were located or bonded together and the ethoxy groups were located or bonded together, with propylene oxide being reacted before ethylene oxide. After the reaction, the catalyst was neutralized with acetic acid.

Using these four (4) alkoxylate Products, a series of eight (8) compositions were prepared. Four (4) of the compositions (Examples 1 to 4) included 95% by weight of water and 5% by weight of a different one of the alkoxylate products. The other four (4) of the compositions (Examples 5 to 8) included 95% by weight of water, 0. 83% by weight of a conventional primary alcohol ethoxylate surfactant, formerly sold under the trademark TERGITOL®24-L-6ON by Union Carbide Chemicals and Plastics Company Inc., and 4.17% by weight of a different one of the alkoxylate products.

Two (2) control compositions were also formulated. Control I included 95% by weight of water and 5% by weight of diethylene glycol butyl ether, a conventional cleaning composition solvent. Control II included 95% by weight of water, 0.83% by weight of the conventional surfactant noted above, and 4.17% by weight of diethylene glycol butyl ether.

Each of these ten (10) compositions was tested for cleaning efficiency using the following procedure.

A. Preparation of Soiling Composition

1. Place the following ingredients in the amounts specified into a wide-mouth 8-ounce bottle

| Ingredients | Grams |
|---|---|
| Deodorized Kerosene | 20.0 |
| Stoddard Solvent | 20.0 |
| Mineral Oil | 1.0 |
| Hydrogenated vegetable shortening | 1.0 |
| Carbon Black | 0.2 |
| Metallic Brown Pigment | 9.8 |
| "Bandy Black" Clay | 10.0 |
| Motor Oil Base, 100Sus,Neutral | 1.0 |

2. Mix ingredients thoroughly. Melt shortening in microwave oven on high for approximately one minute before placing into the bottle. The soil mixture is to be stirred while soiling the tiles, since the soil mixture separates rapidly.
3. Use soil within one hour of preparation.

B. Soiling Procedure

1. Remove factory finish from tiles (CSMA white solid vinyl tiles, each 1/8 inch x 3 inch x 3 inch) by immersing for five minutes in heptane. During immersion, wipe tiles with cloth to hasten removal of finish. Change heptane solvent every day or after each set of 16 tiles.
2. Air dry tiles in rack for at least 10 minutes.
3. Position test tile in wash tray of Gardner Wet 30 Abrasion Scrub Tester. This tester is adapted with stainless steel trays fitted with 1/8 inch inserts with a 3 inch x 3 inch square cut out in center bottom. These inserts are used to bold the tiles flush.
4. Insert a wood block in a metal holder and wire a steel wool pad under the block. The steel wool is replaced every day, or after soiling approximately 16 tiles. The new steel wool pad is conditioned by completing steps 3-5 for 2 tiles.
5. Place 10 drops of soil mixture on the tile, spread with small paint brush (approximately 20 strokes with

a 1/4 inch paint brush) and Operate apparatus for 10 strokes (5 cycles). Rotate tile 90 degrees, apply 5 drops of soil, spread with brush, operate apparatus for 10 strokes. Repeat sequence (rotate, 5 drops of soil, etc.) twice again.

6. Repeat steps 3-5 for all tiles. Wipe excess soil from inserts between tile sets.

7. Allow test tiles to dry for at least 1 hour. Place tile in oven at 105°C for 20 minutes. Allow test tiles to further dry and cool for at least 2 hours.

8. Using a facial quality tissue, wipe off all the loose soil. Use a fresh tissue for each tile.

9. Using a pacific scientific Colorgard TM System 1000 color meter, measure the reflectance of each soiled tile. Four readings are taken at different positions on each tile and averaged. The "Y" value readings for the soiled tiles using the 1976 CIE international color scale should be in the range of 16-19. Calibrate colorimeter with standards each time. Fluorescence should be excluded. The reflectance of the tiles before soiling is determined using the procedure outlined in this Paragraph 9 on the air dried tiles after removal of the factory finish (Paragraph 1).

C. Detergency Evaluation

1. Precondition a sponge by running under warm tap water while squeezing. Wring essentially dry.

2. Center 2 soiled tiles in the trays of the apparatus using the inserts. Place the preconditioned sponges in the holders. Four 200 ml of the composition being tested into each tray and allow to soak for 5 minutes.

3. Operate the apparatus for 5 cycles. Rotate the tile 90 degrees. Repeat procedure 3 additional times for a total of 40 strokes (20 cycles). Rinse tiles under a stream of cold tap water and allow to drain and air dry.

4. Discard composition in trays, rinse trays and sponge. Wring sponge essentially dry.

5. With the same sponge, repeat steps 2-4 for 2 additional soiled tiles.

6. Repeat steps 1-5 for each composition being tested.

7. Measure reflectance of each cleaned tile in a manner similar to that used for the freshly soiled tiles. Average the 4 readings on each tile.

The percent soil removal is determined based on the following equation

$$\%\ \text{Soil Removal} = \frac{A - B}{C - B} \times 100$$

A = Reflectance of soiled tile after cleaning

B = Reflectance of soiled tile before cleaning

C = Reflectance of tile before soiling

Using this test procedure, cleaning efficiency results for the ten (10) compositions tested were as follows:

| Example [1] | % Soil Removal | Normalized |
|---|---|---|
| Control I | 12.31±0.72 | 1.00 |
| 1 (6.5PO/6.9EO) | 45.06±0.06 | 3.66 |
| 2 (6.5PO/12MEO) | 40.02±0.03 | 3.25 |
| 3 (7. 3EO) | 44.38±0.23 | 3.61 |
| 4 (7.2EO) | 44.37±0.46 | 3.60 |
| Control II | 38.40±0.93 | 1.00 |
| 5 (6.5PO/6.9MEO) | 46.55±1.39 | 1.21 |
| 6 (6.5P0/12EO) | 40.52±2.50 | 1.06 |
| 7 (7.3EO) | 44.56±0.37 | 1.16 |
| 8 (7.2E0) | 44.50±1.03 | 1.16 |

(1) The reference to PO/EO or EO relates to the specific alkoxylate of 2,6-heptan-4-ol being employed in the composition in question. Thus, for example, the alkoxylate (a mixture of individual alkoxylate compounds) used in Examples 1 and 5 includes an average of 6.5 propoxy units and an average of 6.9 ethoxy units, while the alkoxylate used in Examples 3 and 7 includes no propoxy units and an average of 7.3 ethoxy units.

Comparing Examples 1 to 4 with Control 1, all the compositions which include 5% by weight of the presently useful alkoxylates clean at least three (3) times better than Control I, which includes a conventional solvent but not the alkoxylate. Comparing Examples 1 and 5, 2 and 6, 3 and 7, and 4 and 8, respectively, the cleaning efficiency of the alkoxylate-containing compositions remains substantially unchanged or unaffected by the addition of surfactant. Moreover, Compositions 1 to 4, without surfactant, clean more efficiently than does Control II, with surfactant.

EXAMPLES 9 TO 16

Another series of four (4) ethoxylates were prepared generally following the procedure outlined in Examples 1 to 8, except that potassium hydroxide was used as the catalyst throughout the ethoxylation.

Using these four (4) ethoxylate products, a series of eight (8) compositions were prepared. Four (4) of the Compositions (Examples 9 to 12) included 95% by weight of water and 5% by weight of a different one of the ethoxylate products. The other four (4) of the compositions (Examples 13 to 16) included 95% by weight of water, 0.83% by weight of a conventional nonylphenol polyethylene glycol ether surfactant, sold under the trademark TERGITOL®NP-9 by Union Carbide Chemicals and Plastics Company Inc., and 4.17% by weight of a different one of the ethoxylate products.

Four (4) control compositions were also formulated. Controls III and IV included 95% by weight of water and 5% by weight of ethylene glycol butyl ether, a conventional cleaning composition solvent. Controls V and VI included 95% by weight of water, 0:83% by weight of the conventional surfactant noted above, and 4.17% by weight of ethylene glycol butyl ether.

Each of these twelve (12) compositions was tested for cleaning efficiency in accordance with the test procedure outlined in Examples 1 to 8.

Results of these tests were as follows:

| | EXAMPLE (1) | %Soil Removal |
|---|---|---|
| 9 | (5.3 EO) | 36.32±2.81 |
| 10 | (7.4 EO) | 36.85±1.61 |
| Control | III | 12.03±0.82 |
| 11 | (9.2 EO) | 32.43±0.98 |
| 12 | (12.8 EO) | 32.60±1.87 |
| | Control IV | 11.71±0.29 |
| 13 | (5.3 EO) | 45.70±2.14 |
| 14 | (7.4 EO) | 46.01±1.73 |
| | Control V | 43.21+1.31 |
| 15 | (9.2 EO) | 48.75±2.82 |
| 16 | (7.4 EO) | 52.28±0.44 |
| 15 | Control VI | 46.97+1.01 |

(1) See footnote (1) in Examples 1 to 8.

These results indicate that the presently useful ethoxylates provide enhanced cleaning efficiency relative to conventional cleaning composition solvents. However, the addition of a surfactant does further enhance the cleaning efficiency of the ethoxylate-containing compositions. This may be due, at least in part, to the presence of a relatively large amount of unreacted 2,6-heptan-4-ol in these ethoxylate products because potassium hydroxide is a relatively less effective ethoxylation catalyst for secondary alcohols compared to $BF_3$. Also, note that Control III and Control IV have the same composition (as do Control V and Control VI), yet these compositions, which were tested at different times, provide slightly different cleaning efficiencies. These control samples, thus, give some indication of the time to time reproducibility of the cleaning efficiency test.

EXAMPLES 17 TO 20

Ethoxylate products similar to those used in Examples 10 and 12 were further subjected to stripping to remove unreacted 2,6-dimethyl heptan-4-ol. Using these stripped ethoxylate products, a series of four (4) compositions were prepared, each of which corresponding to a different one of the compositions used in Examples 10, 12, 14 and 16.

Each of these four (4) compositions was tested for cleaning efficiency in accordance with the test procedure outlined in Example 1 to 8.

Results of these tests, as well as results obtained using the corresponding compositions of Examples 10, 12, 14 and 16 were as follows:

| | EXAMPLE (1) | % Soil Removal |
|---|---|---|
| 10 | (7.4 EO) | 36.75 |
| 14 | (7.4 EO) | 46.01 |
| 17 | (7.4 EO) | 37.28 |
| 18 | (7.4 EO) | 37.44 |
| 12 | (12.8 EO) | 38.81 |
| 16 | (12.8 EO) | 52.28 |
| 19 | (12.8 EO) | 40.40 |
| 20 | (12.8 EO) | 49.35 |

(1) See footnote (1) in Examples 1 to 8

These results indicate that stripping the ethoxylate product of unreacted alcohol does result in a composition which is less affected, in terms of cleaning efficiency, by the addition of surfactant. For example, with the unstripped ethoxylate product of Examples 10 and 14 the presence of a surfactant increased soil removal by more than 9%. In contrast, with the stripped ethoxylate product of Examples 17 and 18, the presence of a surfactant had substantially no effect on percent soil removal.

EXAMPLES 21 TO 28

A series of four (4) alkoxylates were prepared by first reacting 2,6-dimethyl heptan-4-ol with an appropriate amount of propylene oxide and than further reacting this product with an appropriate amount of ethylene oxide. Both reactions were conducted in a manner similar to that outlined in Examples 1 to 8. The resulting alkoxylate products included a "block" of propoxy groups followed by a "block" of ethoxy groups.

Using these four (4) alkoxylate products, a sevies of eight (8) compositions were prepared. Four (4) of the compositions (Examples 21 to 24) included 95% by weight of water and 5% by weight of a different one of the alkoxylate products. The other four (4) of the compositions (Examples 25 to 28) included 95% by weight of water, 0.83% by weight of a conventional nonylphenol polyethylene glycol ether surfactant, sold under the trademark TERGITOL®NP-9 by Union Carbide Chemicals and Plastics Company Inc., and 4.17% by weight of a different one of the alkoxylate products.

Four (4) control compositions were also formulated. Controls VII and VIII included 95% by weight of water and 5% by weight of ethylene glycol butyl ether, a conventional cleaning composition solvent. Controls IX and X included 95% by weight of water, 0.83% by weight of the conventional surfactant noted above, and 4.17% by weight of ethylene glycol butyl ether.

Each of these twelve (12) compositions was tested for cleaning efficiency in accordance with the test procedure outlined in Examples 1 to 8.

Results of these tests were as follows:

| | EXAMPLE (1) | %Soil Removal |
|---|---|---|
| 21 | (8.3 PO/7EO) | 45.83 (±0.98) |
| 22 | (8.3 PO/12EO)<br>Control VII | 41.08 (±1.69)<br>8.89 (±0.81) |
| 23 | (20PO/7EO) | 44.16 (±1.17) |
| 24 | (20PO/12EO)<br>Control VIII | 42.78 (±0.73)<br>8.80 (±0.58) |
| 25 | (8.3PO/7EO) | 48.45 (±1.41) |
| 26 | (8.3PO/7E0)<br>Control IX | 44.38 (±0.78)<br>43.60 (±0.93) |
| 27 | (20PO/7EO) | 51.65 (±0.65) |
| 28 | (20EO/12EO)<br>Control X | 50.56 (±1.24)<br>46.01 (±0.95) |

(1) See footnote (1) in Examples 1 to 8.

These results indicate that the compositions including "block" alkoxylates (Examples 21 to 28) have better cleaning efficiency than the corresponding control compositions, which include a conventional cleaning composition solvent. The addition of a surfactant does affect the cleaning efficiency to a limited extent.

EXAMPLES 29 TO 31

A series of two (2) ethoxylates were prepared using a procedure similar to that outlined in Examples 1 to 8.

Using these two ethoxylate products, two (2) compositions (Examples 29 and 30) were prepared and included 95% by weight of water and 5% by weight of a different one of the ethoxylate products. The other composition (Example 31) included 95% by weight of water, 0.83% of the conventional surfactant described in Examples 9 to 16, and 4.17% by weight of the ethoxylate product used in Example 30.

These three (3) compositions, along with Controls VIII and X, were tested in accordance with the test procedure outlined in Examples 1 to 8.

Results of these tests were as follows:

| | EXAMPLE[1] | %Soil Removal |
|---|---|---|
| 29 | (6.4EO) | 50.16 ± 0.79 |
| 30 | (6.9E0)<br>Control VIII | 47.36 ± 1.22<br>8.28 ± 0.55 |
| 31 | (6.9E0)<br>Control X | 47.33 ± 1.74<br>43.76 ± 1.46 |

(1) See footnote (1) in Example 1 to 8.

The results indicate that the compositions which include the presently useful ethoxylates (Examples 29, 30 and 31) have better cleaning efficiency than the corresponding control compositions, which include a conventional cleaning composition solvent. Also, comparing Examples 30 and 31, the addition of a surfactant does not affect the cleaning efficiency of the composition.

EXAMPLES 32 TO 34

A series of three (3) compositions were prepared. The first composition (Example 32) was similar to the composition of Example 10. The second composition (Example 33) included 95% by weight of water and 5% by weight of a conventional nonylphenol polyethylene glycol ether surfactant, sold under the trademark TERGITOL® NP-9 by Union Carbide Chemicals and Plastics Company Inc. The third composition (Example 34) included 95% by weight of water and 5% by weight of a conventional surfactant sold under the trademark TERGITOL® 15-S-9 by Union Carbide Chemicals and Plastics Company Inc. This latter surfactant was an ethoxylate of a mixture of secondary alcohols containing between 11 and 15 carbon atoms per molecule and was prepared using a $BF_3$/KOH catalyst system similar to that described in Examples 1 to 8. Less than 10% of the secondary alcohols used contained 11 carbon atoms. About 9 moles of ethylene oxide were used to produce 1 mole of the ethoxylate.

Each of these compositions was tested for cleaning efficiency in accordance with the test procedure outlined in Examples 1 to 8. Control III was also tested with these compositions.

Results of these tests were as follows:

| | EXAMPLE[1] | % Soil Removal |
|---|---|---|
| 32<br>33 | (7.4EO)<br>(Comparative) | 42.19 ± 3.14<br>42.83 ± 2.14 |
| 34 | (Comparative)<br>Control III | 43.83 ± 1.98<br>9.62 ± 0.78 |

(1) See footnote (1) in Examples 1 to 8.

These results indicate that the presently useful ethoxylate (Example 32) provides increased cleaning efficiency relative to a conventional cleaning composition solvent (Control III). These results also indicate that similar concentrations of the presently useful ethoxylate (Example 32) and an ethoxylate of a higher alcohol (Example 34) provide substantially the same cleaning efficiency. However, whereas the higher alcohol ethoxylate of Example 34 was made using the preferred $BF_3$/KOH catalyst system, the presently useful ethoxylate of Example 32 was made using a KOH catalyst. A direct comparison between Examples 32 and 34 is not appropriate because of the different ethoxylate production methods.

EXAMPLES 35 TO 38

A series of four (4) compositions were prepared. The first composition (Example 35) was similar to the compositions of Examples 10 and 32. The second composition (Example 36) was similar to the composition of Example 29 and included a presently useful ethoxylate produced using a $BF_3$/KOH catalyst system. The third composition (Example 37) was similar to the composition of Example 14. The fourth composition (Example 38) included 95% by weight of water, 4.17% by weight of the ethoxylate used in Example 36 and 0.83% by weight of the conventional surfactant used in Example 37.

Each of these four (4) compositions, along with Control III and V, was tested for cleaning efficiency in

accordance with the test procedure outlined in Examples 1 to 8.

Results of these tests were as follows:

| EXAMPLE[1] | %Soil Removal |
|---|---|
| 35 | 40.57 ± 1.08 |
| 36 | 46.33 ± 1.39 |
| Control III | 9.71 ± 0.52 |
| 37 | 39.80 ± 0.96 |
| 38 | 46.39 ± 0.87 |
| Control V | 42.36 ± 0.64 |

(1) See footnote (1) in Examples 1 to 8.

These results indicate that the presently useful ethoxylates provide enhanced cleaning efficiency relative to conventional cleaning composition solvents. Further, the addition of a surfactant has substantially no effect on the cleaning efficiency of these compositions.

An additional important point is that the ethoxylate produced using the preferred $BF_3$/KOH catalyst system (Example 38) removes more than 6% more of the soil relative to an ethoxylate produced using a KOH catalyst. This result, when considered in the context of Examples 32 and 34, clearly indicates that the presently useful ethoxylates unexpectedly provide increased cleaning efficiencies relative to ethoxylates of higher alcohols, e.g., alcohols containing more than 10 or 11 carbon atoms.

While this invention has been described with respect to various specific examples and embodiments, it is to be understood that the invention is not limited thereto and that it can be variously practiced within the scope of the following claims.

**Claims**

**1.** A method of cleaning a surface comprising:

contacting a surface with a composition comprising at least one alkoxylate at conditions effective to remove debris from said surface, thereby removing debris from said surface, said at least one alkoxylate being present in an amount of at least about 2% by weight of said composition, effective to solubilize at least a portion of said removed debris and being selected from compounds having the formula

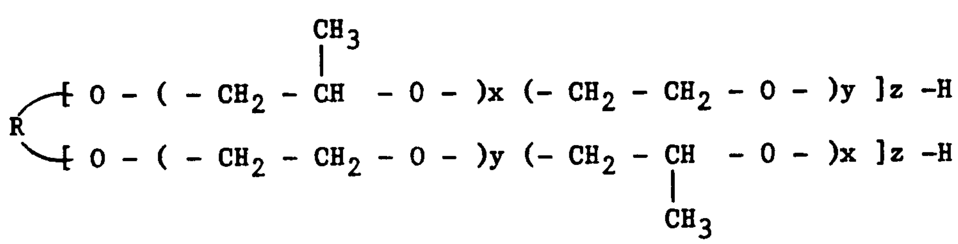

and mixtures thereof, wherein R contains about 5 to about 11 carbon atoms, each x and y is independently selected from integers in the range of 0 to about 20, provided that the sum of all the x's and y's is at least 1, and each z is independently selected from the integers 0 and 1, provided that at least one of the z's is 1.

**2.** The method of claim 1 wherein R is selected from alkylene radicals, substituted alkylene radicals, alkenylene radicals and substituted alkenylene radicals.

**3.** The method of claim 1 wherein said at least one alkoxylate is present in an amount of at least about 5% by weight of said composition.

**4.** The method of claim 1 wherein said composition comprises a major amount by weight of water and said at least one alkoxylate is soluble in said water at said contacting conditions.

5. The method of claim 1 wherein said composition is substantially free of one or more surface active agents other than said at least one alkoxylate.

6. The method of claim 1 wherein R is 2,6-dimethyl heptylene.

7. The method of claim 1 wherein said at least one alkoxylate has the following formula

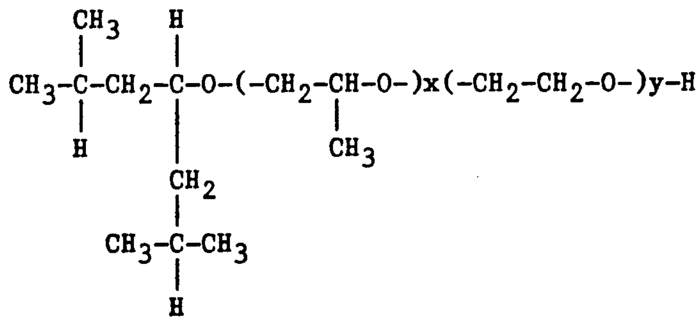

8. A composition useful for removing debris from a surface comprising water and an amount, more than 5% by weight, of at least one alkoxylate selected from compounds having the formula

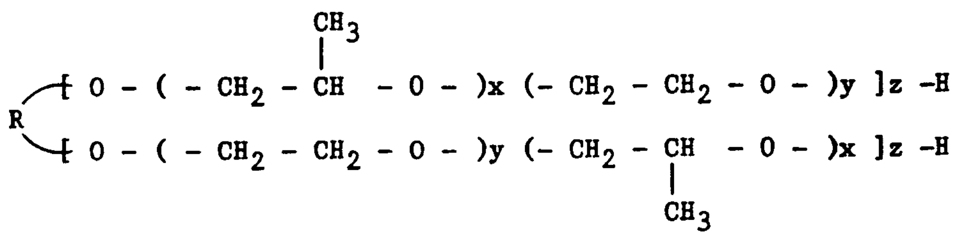

and mixtures thereof, wherein R contains about 5 to about 11 carbon atoms, each x and y is independently selected from integers in the range of 0 to about 20, provided that the sum of all the x's and y's is at least 1, and each z is independently selected from the integers 0 and 1, provided that at least one of the z's is 1.

9. A composition useful for removing debris from a surface comprising water and an amount of at least one alkoxylate effective to solubilize at least a portion of the debris removed from the surface and being selected from compounds having the formula

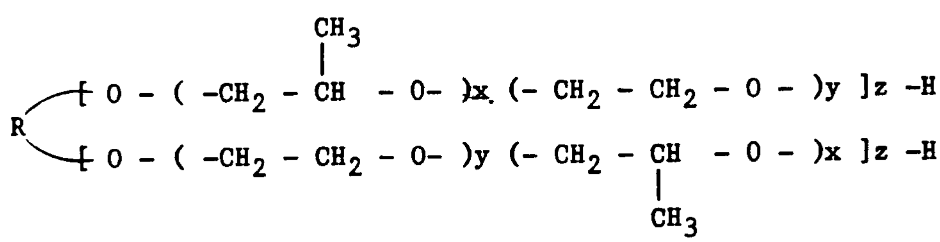

and mixtures thereof, wherein R contains about 5 to about 11 carbon atoms, each x and y is independently selected from integers in the range of 0 to about 20, provided that the sum of all the x's and y's is greater than 10, and each z is independently selected from the integers 0 and 1, provided that at least one of the z's is 1.

10. The composition of claim 9 wherein said at least one alkoxylate is present in an amount of at least about 2% by weight of said composition.

**11.** The composition of claims 8 or 9 wherein R is selected from alkylene radicals, substituted alkylene radicals, alkenylene radicals and substituted alkenylene radicals.

**12.** The composition of claims 8 or 9 which is substantially free of one or more surface active agents other than said at least one alkoxylate.

**13.** The composition of claims 8 or 9 wherein R is 2,6-dimethyl heptylene.

**14.** The composition of claims 8 or 9 wherein said at least one alkoxylate has the following formula